# EUROPÄISCHE PATENTSCHRIFT

(11) **EP 1 066 754 B1**
(45) Veröffentlichungstag und Bekanntmachung des Hinweises auf die Patenterteilung: **28.01.2004**
(21) Anmeldenummer: 00890193.6
(22) Anmeldetag: 20.06.2000
(51) Int. Cl.: A01K 1/10

(54) **Futterschieber**
Forage slider
Réglable fourragère

(30) Priorität: 08.07.1999 AT 118799
(43) Veröffentlichungstag der Anmeldung: 10.01.2001
(73) Patentinhaber: Wölfleder, Hubert, 4771 Sigharting115 (AT)
(72) Erfinder: Wölfleder, Hubert, 4771 Sigharting115 (AT)
(74) Vertreter: Hübscher, Gerhard, Dipl.-Ing.

(56) Entgegenhaltungen:
- EP-A- 0 547 719
- EP-A- 0 608 032
- EP-A- 0 627 160
- EP-A- 0 782 821

## Beschreibung

Die Erfindung betrifft einen Futterschieber nach dem Oberbegriff des Patentanspruches 1.

Derartige Futterschieber ermöglichen es, auf einen Futtergang oder Futtertisch einen größeren Futtervorrat mittels eines Förderwagens oder sonstigen Zubringers aufzubringen und dann bei jeder Fütterung einen für diese Fütterung ausreichende Futtermenge durch Verschieben des Futtervorrates mittels des Futterschiebers in die Reichweite der z. B. durch ein Freßgitter vom Futtervorrat getrennten Tiere, meist in einem Laufstall oder Anbindestall gehaltener Rinder, heranzubringen. Als Futter kommen vorwiegend Rauhfutter oder Silage, gegebenenfalls aber auch andere Futtermischungen in Frage.

Ein Futterschieber der eingangs genannten Art ist aus der EP 0 608 032 A bekannt. Es handelt sich dabei allerdings nur um einen Konstruktionsvorschlag, der in der Praxis unbrauchbar erscheint. Bei dieser Ausführung findet als Antriebseinrichtung eine hydraulische Zylinder-Kolbeneinheit Verwendung, die einfach auf den Boden des Schiebers aufgelegt ist, wobei die als Seile ausgebildeten Zugglieder gegengleich mit dem Ende der Kolbenstange und dem freien Ende des Zylinders der Zylinder-Kolbeneinheit verbunden sind. Die Zylinder-Kolbeneinheit muß dabei in Längsrichtung des Schiebers frei verstellbar sein und wird in ihrer jeweiligen Lage nur durch die Seile gehalten. Hier ergeben sich schon Probleme bei der Zufuhr des Betriebsmittels für den in beiden Richtungen wirksamen Zylinder. Entscheidend ist aber, daß die gesamte Anordnung unstabil wird, da sich der Schieber bei einseitiger Belastung, wenn also das zu fördernde Futter nicht genau in der Mitte des Schiebers oder bezüglich der Mitte gleichmäßig verteilt angeordnet ist, schräg stellen kann, wobei sogar eine erhöhte Beschädigungsgefahr besteht, keinesfalls aber der angestrebte Effekt der gleichmäßigen Futterzubringung erreicht wird. Auch Bodenunebenheiten oder Hindernisse können zur Unstabilität beitragen. In der genannten EP 0 608 032 sind daher auch völlig abweichende Konstruktionen mit starren Antriebseinrichtungen für beide Enden des Schiebers angegeben, wie sie sich auch im übrigen Stand der Technik zeigen. Beispielsweise ist eine Ausführung aus der EP 0 627 160 B bekannt. Dabei ist der Futterschieber selbst mit einer hohen Rückwand versehen, an deren vom Futter abgewandter Seite die Antriebseinrichtung untergebracht wird. Diese besteht bei der bekannten Ausbildung aus einem Getriebemotor, der eine über die gesamte Länge des Futterschiebers reichende Welle antreibt, an deren Enden Kettenräder angebracht sind, über die an bodenseitigen Umlenkrollen die Zugglieder bildende Ketten, meist Rollenketten, geführt sind. Der hohe Futterschieber erschwert den Zugang zum Futtergang bzw. Futtertisch und zur Vorderseite der Freßplätze. Konstruktiv besonders aufwendig ist die Antriebseinrichtung mit den Kettenräder und der über die ganze Futterschieberlänge reichenden Welle, die ordnungsgemäß gelagert werden muß, wobei die Kettenräder und die Umlenkrollen einschließlich des umgelenkten Teiles der Ketten aus Sicherheitsgründen abzudecken sind. Zur Vermeidung der langen Welle, die überdies an die Länge der verschiedenen Futterschieber angepaßt werden muß, wurde schon eine Konstruktion vorgesehen, bei der jedem Kettenrad ein eigener Antriebsmotor zugeordnet wird und diese beiden als Getriebemotoren ausgeführten Elektromotoren nach dem Prinzip der elektrischen Welle synchron angetrieben werden können. Auch hier ergibt sich ein beträchtlicher konstruktiver und baulicher Aufwand. Nach einer anderen Ausführungsform wird der Futterschieber mit mehreren jeweils ortsfest zu lagernden Parallelogrammlenkern befestigt, wobei wenigstens einer dieser Lenker über eine hydraulische Zylinder-Kolbeneinheit antreibbar ist, so daß der Futterschieber auf einer der Schwenkbewegung der Lenker folgenden Bahn - praktisch auf einem Kreisbogenstück - verstellt wird. Wegen der Notwendigkeit der ortsfesten Lagerung der Lenker und der erwähnten Art der Verstellung ergibt sich wieder ein konstruktiv aufwendiger Aufbau mit der Notwendigkeit, die Länge des Futterschiebers größer als die Länge der Freßplatzreihe zu wählen. Selbstverständlich sind auch hier im Schwenkbereich der Lenker und der Zylinder-Kolbeneinheit Sicherheitsvorkehrungen zur Ver-meidung von Unfällen zu treffen.

Aufgabe der Erfindung ist die Schaffung eines Futterschiebers der eingangs genannten Art, der unter Beibehaltung der äußerst einfachen Bauweise voll betriebssicher ist und unfallsicher untergebracht werden kann sowie verschiedene Längen des Futterschiebers zuläßt. Eine Teilaufgabe der Erfindung besteht in der Schaffung eines einfach geformten Futterschiebers, der den Zugang zum Futtergang bzw. Futtertisch erleichtert.

Die gestellt Aufgabe wird durch die Merkmale des Patentanspruches 1 gelöst.

Durch die angegebene, im nachhinein äußerst einfache Maßnahme wird gewährleistet, daß der Futterschieber nur parallel zu sich selbst verschoben werden kann, wobei die Stabilität durch die Zwangsführung des Haltekopfes im Schieber gewährleistet wird. Tatsächlich bleiben für beide Schieberenden jeweils gleichmäßige Längen der beiden Zugglieder gewährleistet, wogegen bei der bekannten Ausführung ohne weiteres ungleichmäßige Längenveränderungen der mit der Kolbenstange verbundenen Zugglieder gegenüber den mit dem Boden des Zylinders verbundenen Zuggliedern möglich waren.

Konstruktiv wird eine Ausführung nach Anspruch 2 bevorzugt. Dabei ergibt sich eine glatte, einfache Bauweise, durch die auch die Elemente der Antriebseinrichtung voll geschützt werden. Die allfällige Wartung der Antriebseinrichtung wird durch eine Ausbildung nach Anspruch 3 erleichtert. Die wesentlichen Elemente der Antriebseinrichtung sind also hier mit dem Unterteil verbunden. Durch die Höhe der Abdeckhaube, die variierbar ist, kann die Gesamthöhe des Futterschiebers bestimmt werden, wobei sich allerdings in der Praxis gezeigt hat, daß für die meisten Anwendungsarten eine Schieberhöhe von unter 30 cm ausreicht. Bei dieser Schieberhöhe kann dieser Schieber leicht überstiegen werden, so daß Futtergang und Futtertisch von jeder Stelle auch des Längsbereiches des Futterschiebers her leicht zugänglich sind.

Bei einer Ausführung gemäß Anspruch 4 kann der überstehende Teil in der auf- oder eingeklappten Stellung einen Durchfahrts- oder Durchgangsweg freigeben, wodurch u. a. die Anpassung des Futterschiebers an bestehende Stallungen und deren Grundriß erleichtert wird.

Der Einsatz möglichst einfacher Teile zum Aufbau des Futterschiebers wird durch eine Ausbildung nach Anspruch 5 möglich. Die verwendeten Gegenhalter können einfache Haltepratzen sein. Es ist aber auch möglich, den Haltekopf mit Laufrollen oben und unten am Flansch des T-Trägers abzustützen.

Da genügend Platz in Längsrichtung des Futterschiebers zur Verfügung steht, wird man vorzugsweise eine Antriebsart wählen, bei der der Verstellweg des Haltekopfes dem möglichen Verstellweg des Futterschiebers entspricht. Nur in Sonderfällen kann man auch Einrichtungen, z. B. Flaschenzüge, verwenden, bei denen durch diese Einrichtungen der Verstellweg des Haltekopfes in einen vergrößerten Verstellweg der Führungsseile umgesetzt wird.

Bei einer Ausführung nach Anspruch 6 sind wieder verschiedene Varianten für die Versorgung möglich. Bei größeren Ställen, die mehrere Futterschieber benötigen, kann dabei auch nach Anspruch 7 vorgegangen werden.

Neben hydraulisch betätigten Zylinder- Kolbeneinheiten sind auch andere Antriebseinrichtugen zur Längsverstellung des Haltekopfes möglich. Beispiele dafür sind in den Ansprüchen 8 - 10 angegeben. Es ist auch ein Antrieb über eine Ritzel-Zahnstangeneinheit möglich.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: in schematisierter vereinfachter Darstellungsweise ein Teilstück eines Laufstalles mit einem vor einem Freßgitter auf einem Futtertisch angebrachten Futterschieber im Schaubild,
- Fig. 2: den Futterschieber nach Fig. 1 bei abgenommener Abdeckhaube in Draufsicht,
- Fig. 3: einen Schnitt nach der Linie III-III der Fig. 2,
- Fig. 4: einen Querschnitt durch den Futterschieber im Bereich der Längsführung und
- Fig. 5: zur Erläuterung der Funktionsweise eine schematische Darstellung der Seilführung innerhalb des Futterschiebers.

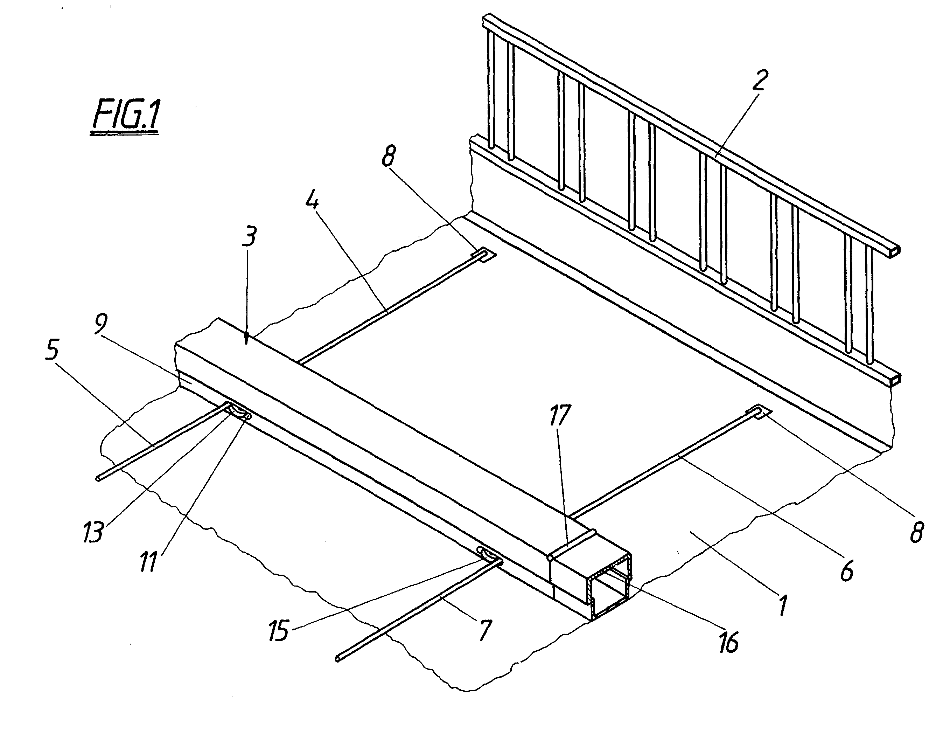

Nach Fig. 1 ist auf dem Futtertisch 1, der in einem Lauf- oder Anbindestall vor einem Freßgitter 2 angebracht wird, ein Futterschieber 3 entlang von Zuggliedern, beim Ausführungsbeispiel Führungsseilen 4, 5, 6, 7 im wesentlichen parallel zum Freßgitter 2 hin- und herverstellbar. Die Seile 4 - 6 sind an den Enden des Verstellweges vorzugsweise lösbar an Bodenankem 8 gehalten. Der Futterschieber 3 bildet einen hohlen Kasten mit einem aus einer U-Schiene bestehenden Unterteil 9 und einer verkehrt U-förmigen Abdeckhaube 10, wobei im Ein- bzw. Ablaufbereich der Seile 4 - 7 aus Öffnungen 11 der Seitenflansche des Unterteiles 9 herausragende Umlenkrollen 12, 13, 14, 15 im Unterteil 9 gelagert sind. Diese Umlenkrollen 12 - 15 können auch zur Gänze innerhalb des oder außen am Unterteil 9 gelagert sein.

In Fig. 1 ist noch angedeutet, daß die Führungsseile 4 - 7 und damit die Umlenkrollen 12 - 15 innerhalb des Längsbereiches des Futterschiebers 3 angebracht werden können, wobei ein Endstück 16 des Kastens, dessen Länge nach den jeweiligen Erfordernissen variieren kann, um ein oberes Querscharnier 17 aufklappbar angebracht wird.

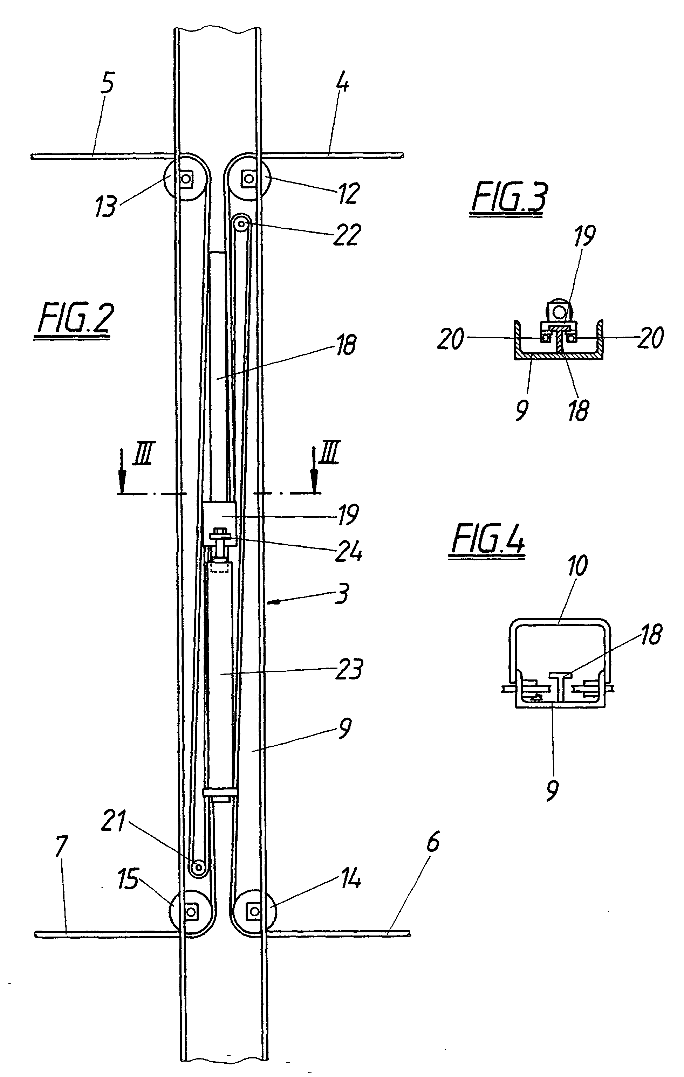

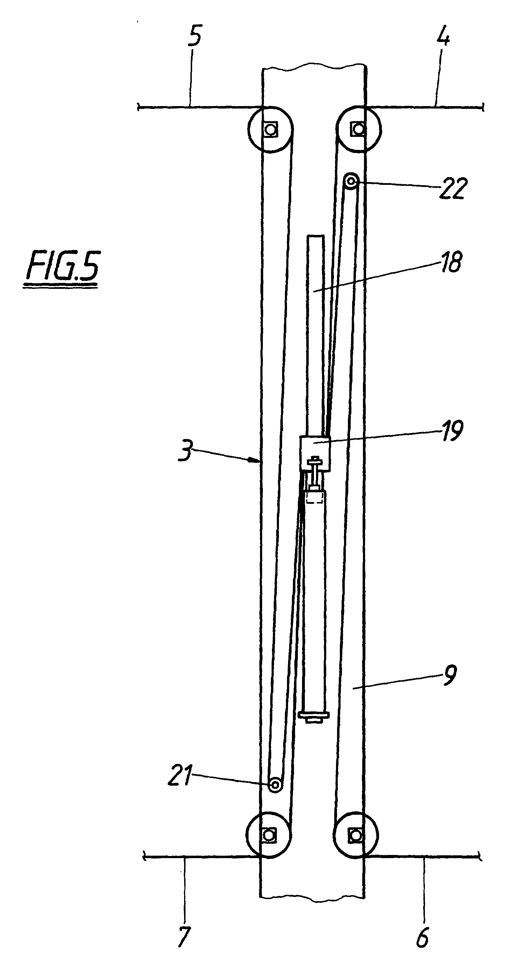

In der einen Hälfte des Schiebergehäuses zwischen den Umlenkrollen 12, 14 bzw. 13, 15 ist eine aus einer T-Schiene 18 bestehende Längsführung angebracht, auf der ein Haltekopf 19, der den Flansch des T-Stückes mit Halterungen umgreift, auf diesem T-Stück geführt ist und Halterungen 20 für die gesonderte Befestigung der Enden der Seile 4 - 7 aufweist. Wie aus dem Schema nach Fig. 5 besonders gut ersichtlich ist, sind die Seile 4 und 7 direkt mit dem Haltekopf 19 verbunden, wogegen die Seile 5 und 6 innerhalb des Kastens um Umlenkrollen 21, 22 und von diesen zurück zum Haltekopf 19 geführt werden. Wird daher der Haltekopf 19 aus der Stellung nach Fig. 5 - in der Zeichnung nach oben - verstellt, so zieht er die Seile 5, 7 in den Kasten des Schiebers 3 und läßt um das gleiche Maß die Seile 4 und 6 nach. Der Schieber 3 wird also bei dieser Verstellrichtung nach links verstellt. Befindet sich der Haltekopf 19 in einer Verstelllage auf der T-Schiene und wird in der entgegengesetzten Richtung verstellt, dann zieht er die Seile 4, 6 in den Kasten und läßt die Seile 5, 7 nach, der Schieber 3 würde also nach rechts verstellt werden. Zu erwähnen ist, daß in den Fig. 2 und 5 die Rollen 21, 22 der besseren Übersichtlichkeit halber kleiner als die Rollen 12 - 15 gezeichnet wurden, in der Praxis aber deren Durchmesser aufweisen können, wobei die Rollen 21, 22 dann in der Mitte des Unterteiles 9 angebracht sind.

Zur Verstellung des Haltekopfes 19 ist eine hydraulisch betätigte Zylinder-Kolbeneinheit 23 vorhanden, die sich mit dem einen Ende im Kasten abstützt und mit dem anderen Ende über einen Kreuzkopf 24 am Haltekopf 19 angreift. Eine zur Versorgung dieser Einheit und zu ihrer beidseitigen Beaufschlagung dienende Motorpumpe wurde nicht dargestellt. Sie kann innerhalb des Kastens 3 untergebracht sein oder auch ortsfest im Stall vorgesehen und über Schläuche und Umsteuerschieber mit der Zylinder-Kolbeneinheit 23 verbunden werden. Andere Möglichkeiten des Längsantriebes für den Haltekopf wurden in der allgemeinen Beschreibung angegeben.

## Patentansprüche

1. Futterschieber (3), der zum Heranbringen von auf einen Futtergang oder Futtertisch (1) gebrachtem Futter an eine Freßplatzreihe (2) über eine an ihm angebrachte Antriebseinrichtung (19, 21, 22, 23) entlang flexibler, an den Enden des möglichen Verstellweges befestigbarer Zugglieder (4 - 7) quer zu seiner Längsrichtung hin- und herverstellbar ist, wobei die Antriebseinrichtung (19, 21, 22, 23) wenigstens einen über einen Stelltrieb in Längsrichtung des Schiebers (3) proportional dem Schieberverstellweg verstellbar und mit den Zuggliedern (4 - 7) über Umlenk- und Leitrollen (12 - 15, 21, 22) verbunden ist, so daß sie je nach Verstellrichtung die an der einen Schieberseite ablaufenden Zugglieder (4, 6) einzieht und entsprechend die von der anderen Schieberseite ablaufenden, bei der entgegengesetzten Verstellrichtung eingezogenen Zugglieder (5, 7) unter Vergrößerung ihrer in Verstellrichtung wirksamen Länge nachläßt, **dadurch gekennzeichnet, daß** die Antriebseinrichtung (19, 21, 22, 23) einen verstellbaren Haltkopf (19) aufweist, der im Futterschieber (3) geführt ist und mit dem alle Zugglieder (4 - 7) verbunden sind.

2. Futterschieber nach Anspruch 1, **dadurch gekennzeichnet, daß** in dem einen hohlen Kasten (9, 10) bildenden Schieberkörper (3) eine Längsführung (18) für den Haltekopf (19) und der zugeordnete Stelltrieb (23) untergebracht sowie die Umlenk- und Leitrollen (12 - 15, 21, 22) gelagert und im Bereich der Umlenkrollen (12 - 15) an den Ein- bzw. Ablaufstellen der Zugglieder (4 - 7) entsprechende Öffnungen (11) vorgesehen sind.

3. Futterschieber nach den Ansprüchen 1 und 2, **dadurch gekennzeichnet, daß** der Kasten (3) aus einer U-Schiene (9) als Unterteil und einer im Querschnitt vorzugsweise ebenfalls verkehrt U-förmigen abnehmbaren Abdeckhaube (10) besteht und die Längsführung (18) des Haltekopfes (19) sowie die Umlenk- und Leitrollen (12 - 15, 21, 22) am bzw. im Unterteil (9) vorgesehen sind.

4. Futterschieber nach einem der Ansprüche 1 bis 3, **dadurch gekennzeichnet, daß** die Durchführungsstellen (11) für die aus Ketten oder Seilen (4 - 7) gebildeten Zugglieder mit Abstand von wenigstens einem Längsende des Schieberkörpers (3) vorgesehen sind und der überstehende Teil (16) des Schieberkörpers um eine Querachse (17) auf- oder einklappbar angebracht ist.

5. Futterschieber nach einem der Ansprüche 1 bis 4, **dadurch gekennzeichnet, daß** die Längsführung für den Haltekopf (19) aus dem Flansch eines T-Trägers (18) gebildet ist, der mit dem Steg am Boden des Kastenunterteiles (9) befestigt ist, wobei der auf diesem Flansch abgestützte Haltekopf (19) diesen Flansch mit Gegenhaltern beidseitig umgreift.

6. Futterschieber nach einem der Ansprüche 1 bis 5, **dadurch gekennzeichnet, daß** der als hydraulisch oder pneumatisch betätigbare Zylinder-Kolbeneinheit (23) ausgebildete Stelltrieb eine mit dem einen Ende mit dem Haltekopf (19) verbunden und mit dem anderen Ende im Kasten (3) abgestützt ist.

7. Futterschieber nach Anspruch 6, **dadurch gekennzeichnet, daß** Beaufschlagungsleitungen für die Zylinder-Kolbeneinheit (23) als aus dem Schieber (3) heraus zu einer ortsfest angebrachten Motorpumpe geführte Druckschläuche ausgebildet sind und die Motorpumpe über Absperrorgane oder umsteckbare Anschlußleitungen wahlweise mit den Zylinder-Kolbeneinheiten von zwei oder mehreren Futterschiebern (3) verbindbar ist.

8. Futterschieber nach einem der Ansprüche 1 bis 5, **dadurch gekennzeichnet, daß** der Stelltrieb als über einen Motor betätigbarer Schrauben- oder Kugelspindeltrieb ausgebildet ist.

9. Futterschieber nach einem der Ansprüche 1 bis 5, **dadurch gekennzeichnet, daß** der Stelltrieb aus wenigstens einer mit dem Haltekopf über sein Seil antriebsverbundenen Seilwinde besteht.

10. Futterschieber nach einem der Ansprüche 1 bis 5, **dadurch gekennzeichnet, daß** der Stelltrieb als Kettenrundlauf ausgebildet ist, dessen Kette mit dem Haltekopf in Antriebsverbindung steht.

## Claims

1. A device (3), which for the purpose of pushing animal feed, supplied on a fodder passage or fodder table (1), to a row of feeding stations (2) is adapted to reciprocate transversely of its longitudinal direction along flexible traction members (4 - 7) fixable at the ends of the possible reciprocation path, via a drive mechanism (19, 21, 22, 23) disposed on said device, wherein the drive mechanism (19, 21, 22, 23) is movable via a servo-drive in the longitudinal direction of the pushing device (3) proportionally to the pusher reciprocation path and is connected to the traction members (4 - 7) via reversing and guide pulleys (12 - 15, 21, 22) so that, depending on the direction of movement, it pulls in the traction members (4, 6) paid out at one side of the pusher and correspondingly releases the traction members (5, 7) paid out from the other side of the pusher and pulled in in the opposite direction of movement, their length operative in the direction of movement being increased, **characterised in that** the drive mechanism (19, 21, 22, 23) has an adjustable retaining head (19) which is guided in the fodder pusher (3) and is connected to all the traction members (4 - 7).

2. A fodder pusher according to claim 1, **characterised in that** a longitudinal guide (18) for the retaining head (19) and the associated servo-drive (23) is accommodated and the reversing and guide pulleys (12 - 15, 21, 22) are mounted in the pusher body (3) forming a hollow casing (9, 10) and corresponding openings (11) are provided in the region of the reversing pulleys (12 - 15) at the entry and exit points of the traction members (4 - 7).

3. A fodder pusher according to claims 1 and 2, **characterised in that** the casing (3) consists of a U-rail (9) as the bottom part and a removable cover hood which in cross-section is preferably also inversely U-shaped and the longitudinal guide (18) of the retaining head (19) and the reversing and guide pulleys (12 - 15, 21, 22) are provided on and in the bottom part (9) respectively.

4. A fodder pusher according to any one of claims 1 to 3, **characterised in that** the passage points (11) for the traction members, which consist of chains or cables (4 - 7), are provided in spaced relationship from at least one longitudinal end of the pusher body (3) and the projecting part (16) of the pusher body is mounted to swing open and closed about a transverse axis (17).

5. A fodder pusher according to any one of claims 1 to 4, **characterised in that** the longitudinal guide for the retaining head (19) is formed from the flange of a T-girder (18) which is fixed with the web at the bottom of the bottom part (9) of the casing, the retaining head (19) supported on said flange engaging by companion holders around both sides of said flange.

6. A fodder pusher according to any one of claims 1 to 5, **characterised in that** the servo-drive, which is constructed as a hydraulically or pneumatically operable piston and cylinder unit (23) is connected by one end to the retaining head (19) while the other end is supported in the casing (3).

7. A fodder pusher according to claim 6, **characterised in that** actuating lines for the piston and cylinder unit (23) are constructed as pressure hoses taken out of the pusher (3) to a stationary motor pump and the motor pump is selectively connectable to the piston and cylinder units of two or more fodder pushers (3) via shut-off means or reversible connecting lines.

8. A fodder pusher according to any one of claims 1 to 5, **characterised in that** the servo-drive is constructed as a screw or ball spindle drive operable via a motor.

9. A fodder pusher according to any one of claims 1 to 5, **characterised in that** the servo-drive consists of at least one cable winch connected to the retaining head in driving relationship via its cable.

10. A fodder pusher according to any one of claims 1 to 5, **characterised in that** the servo-drive is constructed as a rotary chain, the chain being connected to the retaining head in driving relationship.

## Revendications

1. Poussoir à fourrage (3), réglable dans un sens et dans l'autre, transversalement par rapport à sa direction longitudinale, pour l'amenée de fourrage placé sur un chemin à fourrage ou une table à fourrage (1), sur une rangée d'emplacements de nourrissage (2), par l'intermédiaire d'un dispositif d'entraînement (19, 21, 22, 23) monté sur le poussoir à fourrage (3), le déplacement se faisant le long d'organes de traction (4 à 7) flexibles, susceptibles d'être fixés aux extrémités de la course de réglage possible, le dispositif d'entraînement (19, 21, 22, 23) étant manoeuvrable, par l'intermédiaire d'une transmission de réglage, dans la direction longitudinale du poussoir (3), proportionnellement à la course de réglage du poussoir et étant relié aux organes de traction (4,7), par l'intermédiaire de galets de renvoi et de guidage (12 à 15, 21, 22), de manière que, selon la direction de manoeuvre, il attire les organes de traction (4, 6) partant sur un côté du poussoir et que, de manière correspondante, il laisse filer les organes de traction (5, 7), partant de l'autre côté du poussoir, qui sont attirés lorsque le sens de manoeuvre est inverse, ceci s'accompagnant d'un allongement de leur longueur efficace, **caractérisé en ce que** le dispositif d'entraînement (19, 21, 22, 23) présente une tête de maintien (19) réglable, guidée dans le poussoir à fourrage (3) et à laquelle tous les organes de traction (4,7) sont reliés.

2. Poussoir à fourrage selon la revendication 1, **caractérisé en ce que**, dans le corps de poussoir (3), formant un caisson (9, 10) creux, sont logés un guidage longitudinal (18), pour la tête de maintien (19), et la transmission de réglage (23) associée, et des galets de renvoi et des galets de guidage (12 à 15, 21, 22) y sont montés à rotation, et des ouvertures (11) correspondantes étant prévues dans la zone des galets de renvoi (12 à 15), aux points d'introduction et d'évacuation des organes de traction (4 à 7).

3. Poussoir à fourrage selon les revendications 1 et 2, **caractérisé en ce que** le caisson (3) est formé d'une glissière en U (9), faisant office de partie inférieure, et d'un capot de couverture (10) extractible, à la section transversale de préférence également en forme de U inversé, et le guidage longitudinal (18) de la tête de maintien (19) ainsi que les galets de renvoi et de guidage (12 à 15, 21, 22) sont prévus sur, respectivement dans, la partie inférieure (9).

4. Poussoir à fourrage selon l'une des revendications 1 à 3, **caractérisé en ce que** les points de passage (11) des organes de traction, formés de chaînes ou de câbles (4 à 7), sont prévus à distance d'au moins une extrémité longitudinale du corps du poussoir (3), et la partie (16), en position supérieure, du corps de poussoir est montée de façon à pouvoir être levée ou introduite par basculement, autour d'un axe transversal (17).

5. Poussoir à fourrage selon l'une des revendications 1 à 4, **caractérisé en ce que** le guidage longitudinal, prévu pour la tête de maintien (19), est formé à partir de la semelle d'une poutre en T (18), qui est fixée, par l'âme, au fond de la partie inférieure de caisson (9), sachant que la tête de maintien (19), prenant appui sur cette semelle, entoure des deux côtés cette semelle par des contre-supports.

6. Poussoir à fourrage selon l'une des revendications de 1 à 5, **caractérisé en ce que** la transmission de réglage, réalisée sous la forme d'unité à piston et cylindre (23), pouvant être actionnée de façon hydraulique ou pneumatique, est reliée, par une extrémité, à la tête de maintien (19) et prenant appui, par l'autre extrémité, dans le caisson (3).

7. Poussoir à fourrage selon la revendication 6, **caractérisé en ce que** des conduites d'alimentation, pour l'unité à piston et cylindre (23), sont réalisées sous la forme de tuyaux flexibles à pression, guidés hors du poussoir (3) et allant vers une pompe à moteur, montée de façon localement fixe, et la pompe à moteur est susceptible d'être reliée, par des organes d'isolement, ou bien par des conduits de raccordement ré-enfichables, à volonté, aux unités à piston et cylindre appartenant à deux poussoirs à fourrage (3) ou plus.

8. Poussoir à fourrage selon l'une des revendications 1 à 5, **caractérisé en ce que** la transmission de réglage est réalisée sous la forme de transmission à vis ou à broche à rotule, actionnable par l'intermédiaire d'un moteur.

9. Poussoir à fourrage selon l'une des revendications 1 à 5, **caractérisé en ce que** la transmission de réglage est formée d'au moins un treuil à câble, relié en entraînement à la tête de maintien, par l'intermédiaire de son câble.

10. Poussoir à fourrage selon l'une des revendications 1 à 5, **caractérisé en ce que** la transmission de réglage est réalisée sous la forme de circulation de chaîne, dont la chaîne est en liaison d'entraînement avec la tête de maintien.
